# EUROPÄISCHE PATENTSCHRIFT

(11) **EP 0 527 260 B1**
(45) Veröffentlichungstag und Bekanntmachung des Hinweises auf die Patenterteilung: **02.11.1995**
(21) Anmeldenummer: 91113664.6
(22) Anmeldetag: 14.08.1991
(51) Int. Cl.: H04Q 11/04, G06F 15/16, G06F 13/18, H04Q 3/545

(54) **Schnittstellenbaustein zur Unterstützung der Kommunikation zwischen Prozessorsystemen**
Interface unit for supporting the communication between processor systems
Unité d'interface pour supporter la communication entre des systèmes à processeur

(43) Veröffentlichungstag der Anmeldung: 17.02.1993
(73) Patentinhaber: SIEMENS AKTIENGESELLSCHAFT, 80333 München (DE)
(72) Erfinder: Weber, Jürgen, Dipl.-Ing., W-8000 München 21 (DE); Nagler, Werner, Dipl.-Ing., W-8021 Schäftlarn (DE); Böcker, Gerd, Dipl.-Ing., W-8000 München (DE)

(56) Entgegenhaltungen:
- EP-A- 0 261 947
- EP-A- 0 282 197
- EP-A- 0 320 041
- CH-A- 541 266
- US-A- 4 633 461
- US-A- 4 918 589
- E&I ELEKTROTECHNIK UND INFORMATIONSTECHNIK Bd. 106, Nr. 11, November 1989, WIEN (AT) Seiten 485 - 495; PÖLLHUBER: 'Hardware-Struktur und Hardware-Funktion der System-Variante OES.E des österreichischen Digitalen Telefonsystems'

## Beschreibung

In den peripheren Anschlußgruppen eines digitalen Fernsprechvermittlungssystems muß eine protokollorientierte Kommunikation zwischen den eine Anschlußgruppe steuernden Prozessoren gewährleistet sein.

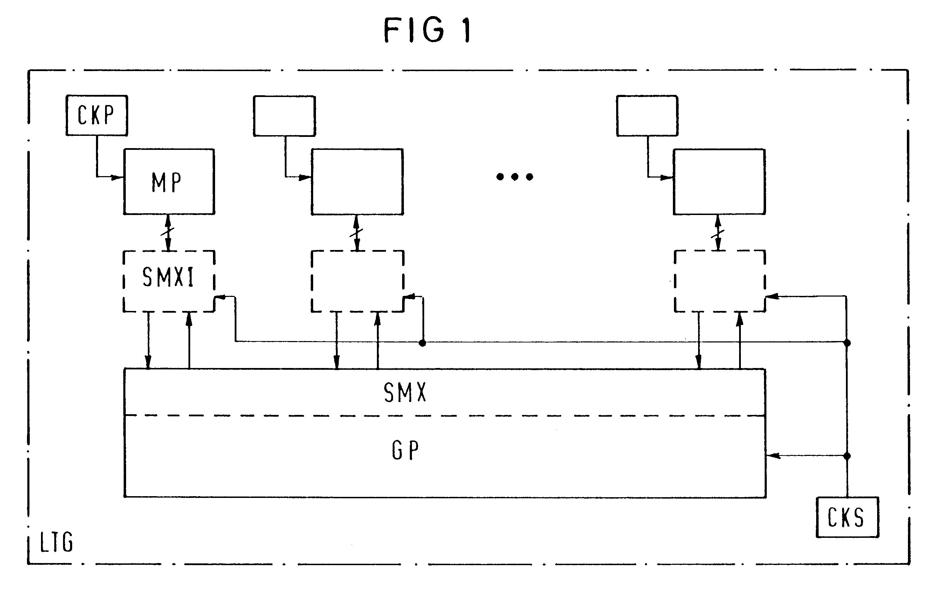

FIG 1 zeigt eine physikalische Verbindungsstruktur zwischen einem Gruppenprozessor GP, der eine gesamte Anschlußgruppe LTG steuert und mehreren Baugruppenprozessoren MP, die die verschiedenen Baugruppen einer Anschlußgruppe steuern. Der Gruppenprozessor sendet und empfängt Nachrichten in Form von Nachrichtenblöcken an bzw. von verschiedenen Baugruppenprozessoren über ein Nachrichtenverteilersystem SMX nach einer festen Pulsrahmenstruktur im Zeitmultiplex. Ein Schnittstellenbaustein SMXI dient als Schnittstelle zwischen Baugruppenprozessor und Nachrichtenverteilersystem.

Die Erfindung betrifft einen Schnittstellenbausein, zur Unterstützung der Kommunikation zwischen Prozessorsystemen nach dem Oberbegriff des Anspruchs 1.

Ein derartiger Schnittstellenbaustein ist bereits aus dem Dokument US-A-4 918 589 bekannt.

Der Erfindung liegt die Aufgabe zugrunde, einen Schnittstellenbaustein der genannten Art anzugeben, der bezüglich der Kommunikation mit dem Nachrichtenverteilersystem flexibel ist.

Mit Hilfe des Initialisierungsregisters kann der erfindungsgemäße Schnittstellenbaustein softwaremäßig an verschiedene Kommunikationsprotokolle der Prozessorsysteme angepaßt werden und ermöglicht sogar die Bildung von Unterkanälen.

Ein Schnittstellenbaustein gemäß Anspruch 2 besitzt insbesondere den Vorteil, daß die Resourcen des Prozessorsystems nur dann in Anspruch genommen werden, wenn neue Nachrichten vorliegen.

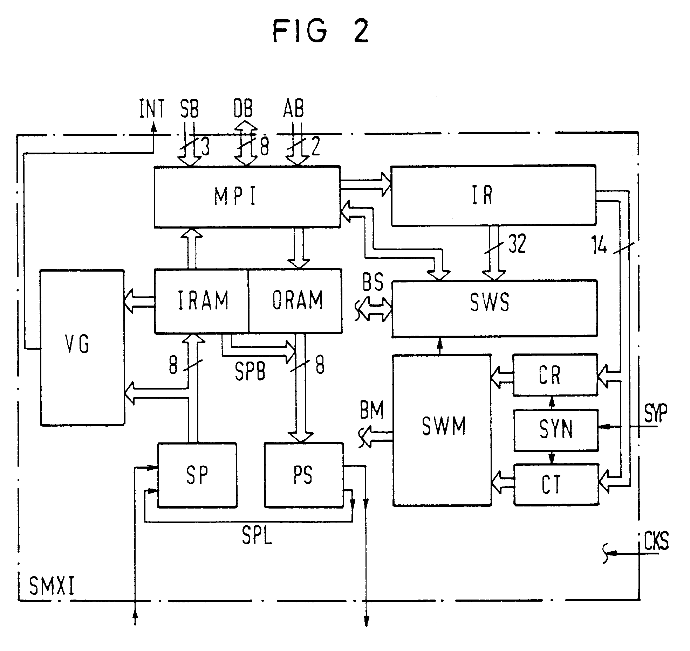

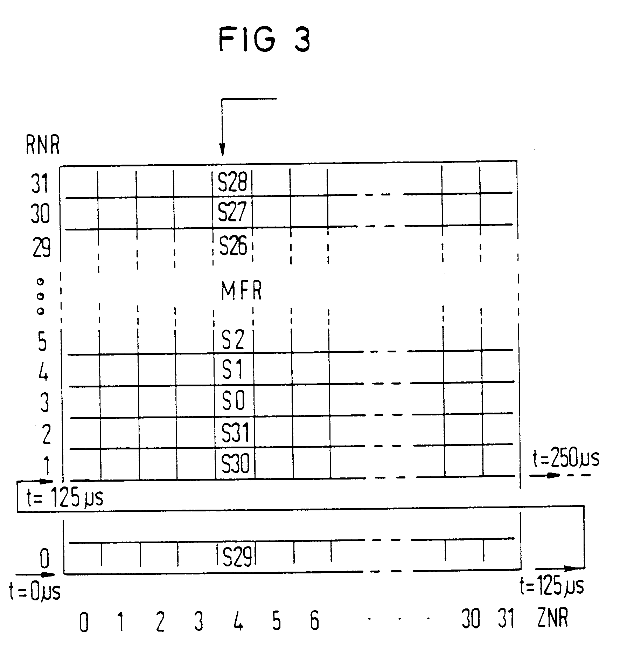

Im folgenden wird ein Ausführungsbeispiel der Erfindung anhand von FIG 2 und FIG 3 näher erläutert.

FIG 2 zeigt die interne Organisation eines erfindungsgemäßen Schnittstellenbausteins SMXI.

Die synchrone, serielle Schnittstelle zum Nachrichtenverteilersystem umfaßt einen Serien-Parallel-Wandler SP und einen Parallel-Serien-Wandler PS in Form von Schieberegistern.

Beide Schieberegister verarbeiten 2,048 Mbit/s serielle Datenströme in beiden Richtungen unabhängig voneinander, wobei im zeitlichen Abstand von 125 usec jeweils 8 Bits empfangen und gesendet werden. Dies entspricht einer nominellen Bitrate von 64 kbit/s und bedeutet, daß der Schnittstellenbaustein jeweils einen Kanal eines Datenstroms mit 32 Kanälen empfängt und sendet. Die Nummer des Sendekanals ist dabei unabhängig von der Nummer des Empfangskanals.

Ein Arbeitstakt CKS des Schnittstellenbausteins beträgt 4,096 MHz und hat damit die doppelte Frequenz des Sende- bzw. Empfangstaktes. Der Sende- bzw. Empfangstakt muß synchron zum Arbeitstakt sein und kann extern durch Teilung des Arbeitstaktes gewonnen werden. Der Arbeitszyklus des Schnittstellenbausteins beträgt 4 msec. Dies entspricht 16384 Perioden (= 2¹⁴) des Arbeitstaktes CKS. Die Zeitpunkte für das Senden und Empfangen von seriellen Daten können unabhängig voneinander gewählt und auf jede beliebige negative Flanke des Arbeitstaktes gelegt werden. Die genannten Zeitpunkte werden relativ zu einem Synchronisationsimpuls eines Synchronisationssignals SYP definiert, der den Baustein im Überrahmenrhythmus (4 msec) synchronisiert, was später noch näher erläutert wird.

Die serielle Schnittstelle wird von einer Mastersteuereinheit SWM in Form eines Mikroprogrammsteuerwerks gesteuert, die über einen Masterbus BM einen Sendespeicher ORAM bzw. einen Empfangsspeicher IRAM zu den entsprechenden Sende- bzw. Empfangszeitpunkten periodisch adressiert. Bei den Sende- bzw. Empfangsspeicher handelt es sich um statische RAM-Einheiten, die unabhängig voneinander arbeiten und jeweils mit 32 Worten zu jeweils 8 Bit (1 Byte) organisiert sind.

Die seriell empfangenen Daten vom Gruppenprozessor werden byteweise in Empfangsspeicher IRAM abgelegt und im zeitlichen Abstand von 4 msec überschrieben. (Umlaufspeicher). Entsprechendes gilt für den Sendespeicher ORAM. Die periodischen Zeitpunkte (Zeitschlitze), zu denen an der seriellen Schnittstelle Daten gesendet und empfangen werden sollen, kann durch Laden von Initialisierungsregistern IR unabhängig voneinander festgelegt werden. Die Periodizität der durch das Mastersteuerwerk ausgeführten Sende- und Empfangsroutinen wird durch zwei unabhängig voneinander ladbare Ringzähler, nämlich einen Empfangszähler CR und einen Sendezähler CT realisiert. Das Laden der Zähler auf die jeweiligen Startwerte (0 bis 16384) erfolgt mit dem systeminternen Synchronisationsimpuls des Synchronisationssignals SYP durch Laden der Daten aus den entsprechenden Initialisierungsregistern IR. Eine Synchronisiereinrichtung SYN sorgt für die vorherige Entstörung des Synchronisationssignals.

Alle Nachrichten zum Gruppenprozessor und vom Gruppenprozessor werden vor dem Senden und nach dem Empfangen über die serielle Schnittstelle für die Dauer eines sogenannten Überrahmens von 4 msec in der Speichereinheit (Sende- und Empfangsspeicher) zwischengespeichert. Der Schnittstellenbaustein faßt somit 32 aufeinanderfolgende Rahmen des Nachrichtenverteilersystems zu einem Überrahmen zusammen.

FIG 3 zeigt einen Sendeüberrahmen mit markiertem Beispiel für einen Sendekanal.
Die 32 Rahmen eines Sendeüberrahmens MFR sind hier ihrer zeitlichen Abfolge nach übereinander angeordnet. Jeder Rahmen hat eine Rahmennummer RNR und besteht aus den Zeitschlitzen 0 bis 31. Ein Kanal faßt alle Zeitschlitze mit gleicher Zeitschlitznummer ZNR über die 32 Rahmen des Sendeüberrahmens zusammen. Das markierte Beispiel zeigt den Sendekanal Nr.5 entsprechend der Zeitschlitznummer 4. Die Zeitschlitznummer ist willkürlich gewählt und kann je nach Initialisierung des Schnittstellenbausteins 0 bis 31 betragen.

Der Inhalt der mit "S" gekennzeichneten Adressen des Sendespeichers ORAM wird nach der Parallel-Seriell-Wandlung jeweils in Zeitschlitz Nummer 4 der von 0 bis 31 aufeinanderfolgenden Senderahmen eingetragen. Während allen anderen Zeitschlitzen trennt sich der Schnittstellenbaustein durch "tristate"-Schalten eines externen Puffers von der Sendeleitung ab.

Durch die Initialisierung des Schnittstellenbausteins in den entsprechenden Initialisierungsregistern IR wird bestimmt, in welchen Senderahmen der Inhalt des Speicherelements des Sendespeichers mit der Adresse 0 in den Sendezeitschlitz eingetragen wird. Die Nummer dieses Rahmens wird als Senderrelativrahmennummer bezeichnet und kann 0 bis 31 betragen. In FIG 3 ist die Senderelativrahmennummer gleich 3. Daraus folgt, daß der Inhalt der Sendespeicheradresse SO im Senderahmen 3, der Inhalt der Sendespeicheradresse S1 im Senderahmen 4 und der Inhalt der Sendespeicheradresse S31 im Senderahmen 2 gesendet wird. Die Information im Sendekanal wiederholt sich im Überrahmenrhythmus, sofern der Baugruppenprozessor MP den Inhalt des Sendespeichers nicht ändert.

Der Schnittstellenbaustein kann durch Initialisierung eines speziellen Pointerregisters dazu veranlaßt werden, auch während Zeitschlitzen des gewählten Sendekanals den externen Puffer hochohmig zu schalten. Jeder Sendespeicheradresse ist in diesem Pointerregister ein Bit zugeordnet. Ist dieses Bit gesetzt, so wird die Aussendung des Inhalts der entsprechenden Sendespeicheradresse verhindert, d.h. der externe Puffer bleibt hochohmig.

Die Verbindung des Schnittstellenbausteins SMXI mit dem Baugruppenprozessor MP erfolgt über eine Prozessorschnittstelleneinheit MPI. Die Prozessorschnittstelleneinheit verfügt über mehrere direkt adressierbare Lese- und Schreibregister, auf die der Baugruppenprozessor über einen 8 Bit Datenbus DB Zugriff hat. Die Ansteuerung der Prozessorschnittstelleneinheit durch den Baugruppenprozessor erfolgt über einen Steuerbus SB und einen Adreßbus AB.

Die Schreibregister der Prozessorschnittstelleneinheit umfassen u.a. ein Auftragsregister zum Laden eines bestimmten Auftrags für den Schnittstellenbaustein, ein Senderegister zur Übergabe von Daten zur Ausführung des entsprechenden Auftrags im Auftragsregister, ein Steuerregister zum Steuern von Sonderfunktionen des Schnittstellenbausteins.
Die Leseregister umfassen u.a. ein Empfangsregister zum Lesen der Datenbytes aus den Empfangsspeicher IRAM, ein Interruptregister zum Lesen eines sogenannten Controlbytes, das den Interrupt erzeugte.

Der Schnittstellenbaustein gibt mittels eines Interruptsignals INT einen Anreiz an den Baugruppenprozessor MP, wenn durch einen Vergleicher VG eine neue Nachricht vom Gruppenprozessor GP erkannt wird. Ohne einen solchen Anreiz wird die Nachricht im Empfangsspeicher IRAM erst gar nicht vom Baugruppenprozessor MP gelesen. Diese Maßnahme spart dem Baugruppenprozessor dynamischen und administrativen Aufwand.

Eine Nachricht bzw. ein Nachrichtenblock besteht aus einem oder mehreren Bytes. Alle Nachrichten, mit Ausnahme der "Ein-Byte-Nachricht", beginnen mit einem bereits oben genannten Controlbyte, gefolgt von einem oder mehreren Informationsbytes und werden von einem Checkbyte abgeschlossen.
Bei einer "Ein-Byte-Nachricht" wird das eine Informationsbyte gleichzeitig als Controlbyte in einem Controlpointerregister und als Checkbyte in einem Checkpointerregister markiert und auch interpretiert. Die beiden genannten Pointerregister gehören zur Gruppe der Initialisierungsregister IR.

Die empfangenen Controlbytes werden durch den Vergleicher VG mit einem "Last-Look-Mechanismus" alle 4 ms zyklisch verglichen. Bei "neuen" Controlbyte wird auf geänderte Nachricht erkannt und nach Empfang des Checkbytes (Nachricht komplett) wird durch die Interrupt-Routine ein Anreiz zum Baugruppenprozessor ausgelöst. Der Interrupt wird erst durch das Lesen des geänderten Controlbytes aus dem Interruptregister der Prozessorschnittstelleneinheit MPI durch den Baugruppenprozessor MP wieder aufgehoben.

Nur das Controlbyte einer Nachricht wird vom Vergleicher VG auf Änderungen untersucht. Änderungen in Informationsbytes oder Checkbytes werden ignoriert. Die dazu erforderliche Ansteuerung des Komparators VG erfolgt über eine Slave-Steuereinheit SWS, die zu diesem Zweck das Controlpointerregister liest.

Die Slave-Steuereinheit SWS steuert die parallele Schnittstelle des Schnittstellenbausteins in Abhängigkeit von Aufträgen des Baugruppenprozessors MP, die sie über das Auftragsregister der Prozessorschnittstelleneinheit MPI erhält. Beispiele für solche Aufträge sind das Schreiben von Datenbytes in den Sendespeicher ORAM über das Senderegister, oder das Initialisieren von Initialisierungsregistern IR, das ebenfalls über das Senderegister erfolgt.

Ein Übertragungskanal kann zur Übermittlung mehrerer Nachrichten in Unterkanäle aufgeteilt werden. Dazu wird z.B. der Empfangsspeicher IRAM in Bereiche geteilt, die den frei definierbaren Unterkanälen entsprechen. So kann z.B. Unterkanal 1 in die Empfangsspeicheradressen 0 bis 5, Unterkanal 2 in die Empfangsspeicheradresse 6 und Unterkanal 3 in die Empfangsspeicheradresse 7 bis 29 eingeteilt werden.

Die Lage der Unterkanäle wird dem Schnittstellenbaustein über die entsprechende Initialisierung durch den Baugruppenprozessor MP mitgeteilt. Hierzu markiert dieser in dem Controlpointerregister die Anfangsadressen der Unterkanäle und in dem Checkpointerregister die Endadressen der Unterkanäle. In dem gewählten Beispiel werden also die Empfangsspeicheradressen 0,6 und 7 als Controlbytes und die Empfangsspeicheradressen 5, 6 und 29 als Checkbytes definiert.

Der Empfangsspeicher kann in beliebige, nicht überlappende Unterkanäle aufgeteilt werden. Hierbei können auch Bereiche ausgespart sein (im genannten Beispiel Empfangsspeicheradresse 30 bis 31) oder ein Bereich kann aus nur einer Adresse bestehen (im genannten Beispiel Empfangsspeicheradresse 6).

Beim Nachrichtenaustausch in einem Unterkanal wird dem Empfänger die Ankunft einer neuen Nachricht, wie bei nur einem Kanal, durch gezielte Änderung des ersten Nachrichtenbytes (Controlbyte) mitgeteilt. Der Schnittstellenbaustein vergleicht jedes empfangene Controlbyte mit dem entsprechenden Controlbyte des vorangegangenen Überrahmens. Erkennt er eine Änderung im Bitmuster, so wird ein Interrupt vorbereitet. Der Schnittstellenbaustein wartet nun, bis das letzte Byte (Checkbyte) der Nachricht im Unterkanal übertragen ist, erzeugt dann ein Interruptsignal INT und setzt ein Interruptflag in dem Statusregister der Prozessorschnittstelleneinheit MPI. Besteht der Kanal nur aus einer Adresse, so wird der Interrupt unmittelbar ausgelöst.

Die Slave-Steuereinheit schreibt den Inhalt des Controlbytes, das einen Interrupt auslöst in das Interrupt-Register, sowie die Empfangsspeicheradresse dieses Controlbytes in das Statusregister. Diese können vom Baugruppenprozessor gelesen werden.

Um zu garantieren, daß eine neue Nachricht in einem Unterkanal mit einem Adreßbereich größer als 1 bei Auslösung des Interrupts vollständig enthalten ist, darf der Sender der Nachricht das geänderte Controlbyte erst nach Eintragung aller anderen Bytes des Unterkanals in seinen Sendespeicher eintragen.

Die beiden Steuereinheiten SWM und SWS sind als zwei physikalisch getrennte Steuerwerke ausgeführt, die im Master-Slave-Modus zusammenarbeiten. Damit ist ein prozeßparalleles Bedienen der asynchronen, parallelen Schnittstelle und der synchronen, seriellen Schnittstelle möglich. Die Steuerung der seriellen Schnittstelle hat aufgrund des phasenstarren Multiplexrahmens des Nachrichtenverteilersystems gegenüber der parallen Schnittstelle Vorrang und wird deshalb von der Master-Steuereinheit SWM durchgeführt, ohne den Zustand der asynchronen Schnittstelle zu berücksichtigen. Die beiden getrennten Steuereinheiten können z.B. durch Mikroprogrammsteuerwerke oder Mikrocontroller realisiert sein.

Obwohl alle über die asynchrone Schnittstelle vom Baugruppenprozessor an den Schnittstellenbaustein herangetragenen Aufgaben von der Slavesteuereinheit SWS selbständig erledigt werden können, bestehen natürlicherweise Abhängigkeiten zur Mastersteuereinheit, die jedoch vom Master-Slave-Mechanismus eigenständig koordiniert werden und in der Umgebung des Schnittstellenbausteins SMXI nicht sichtbar werden. Extern betrachtet sind die beiden Schnittstellen des Schnittstellenbausteins unabhängig voneinander bedienbar.

Zu Test- und Prüfzwecken kann der Baugruppenprozessor durch Aufträge an die Slavesteuereinheit über das Steuerregister der Prozessorschnittstelleneinheit zwei verschiedene Datenspiegel einstellen. Der erste Datenspiegel wird mit Hilfe einer Spiegelbusleitung SPB durchgeführt, indem Nachrichten vom Gruppenprozessor an ihn zurückgeleitet werden. Der zweite Datenspiegel wird mit Hilfe einer Spiegelleitung SPL durchgeführt, indem Daten vom Baugruppenprozessor an ihn zurückgeleitet werden.

Damit können alle wesentlichen Funktionen des Schnittstellenbausteins überprüft bzw. getestet werden. Weiterhin kann der Baugruppenprozessor über das Steuerregister ein Rücksetzen des Schnittstellenbausteins veranlassen.

Aufgrund der vielfältigen Intitialisierbarkeit des Schnittstellenbausteins und der sich daraus ergebenden Flexibilität, sind vielfältige Applikationen denkbar. FIG 1 zeigte die Anwendung des Schnittstellenbausteins zur Unterstützung der Kommunikation zwischen dem Gruppenprozessor GP und mehreren Baugruppenprozessoren MP innerhalb einer Anschlußgruppe LTG. Eine weitere Anwendungsmöglichkeit wäre der Einsatz des Schnittstellenbausteins als eine anwenderspezifische Schnittstelle zwischen geeigneten Mikroprozessoren und PCM 30 Primärmultiplexsystemen.

## Patentansprüche

1. Schnittstellenbaustein (SMXI) zur Unterstützung der Kommunikation zwischen Prozessorsystemen mit folgenden Merkmalen:
a) einer asynchronen parallelen Schnittstelle (MPI) zu einem der Prozessorsysteme (MP),
b) einer synchronen seriellen Schnittstelle (SP, PS) zu einem Nachrichtenverteilersystem (SMX), über das die Prozessorsysteme miteinander kommunizieren,
c) einer Speichereinheit (IRAM, ORAM) zum Zwischenspeichern des Nachrichtenstroms zwischen dem einen Prozessorsystem (MP) und dem Nachrichtenverteilersystem (SMX),
d) einer Steuereinheit (SWM, SWS), die den Schnittstellenbaustein in Abhangigkeit von dem genannten Prozessorsystem steuert, wobei die Steuereinheit zwei Steuerwerke umfaßt, die die beiden genannten Schnittstellen prozeßparallel bedienen,
**gekennzeichnet durch**
e) mindestens ein Initialisierungsregister (IR), über das sowohl der Zeitschlitz, über den die synchrone serielle Schnittstelle (SP, PS) vom Nachrichtenverteilersystem (SMX) Nachrichtenblöcke empfängt, als auch die Länge eines in der Speichereinheit zwischengespeicherten Nachrichtenblocks initialisiert werden, wobei das Initialisierungsregister (IR) von dem über die asynchrone parallele Schnittstelle (MPI) verbundenen Prozessorsystem (MP) initialisiert wird.

2. Schnittstellenbaustein (SMXI) gemäß Anspruch 1,
**gekennzeichnet durch**
eine Komparatorschaltung (VG), die zwei über das Nachrichtenverteilersystem (SMX) empfangene aufeinanderfolgende Nachrichtenblöcke miteinander vergleicht und das genannte Prozessorsystem (MP) nur bei Ungleichheit der Nachrichtenblöcke durch ein Anreizsignal (INT) informiert, worauf sich dieses den neuen Nachrichtenblock abholt.

3. Schnittstellenbaustein (SMXI) gemäß Anspruch 1 oder 2,
**gekennzeichnet durch**
ein Steuerregister, über das das genannte Prozessorsystem (MP) die entsprechende Einstellung des Schnittstellenbausteins für verschiedene Sonderfunktionen veranlassen kann.

## Claims

1. Interface module (SMXI) for supporting the communication between processor systems having the following features:
a) an asynchronous parallel interface (MPI) with respect to one of the processor systems (MP),
b) a synchronous serial interface (SP, PS) with respect to a message distribution system (SMX), via which the processor systems communicate with one another,
c) a memory unit (IRAM, ORAM) for intermediately storing the message stream between the one processor system (MP) and the message distribution system (SMX),
d) a control unit (SWM, SWS), which controls the interface module in dependence on the said processor system, the control unit comprising two controllers, which serve the two said interfaces off-line,
characterized by
e) at least one initialization register (IR), by means of which both the time slot via which the synchronous serial interface (SP, PS) receives message blocks from the message distribution system (SMX) and the length of a message block intermediately stored in the memory unit are initialized, the initialization register (IR) being initialized by the processor system (MP), connected via the asynchronous parallel interface (MPI).

2. Interface module (SMXI) according to Claim 1, characterized by a comparator circuit (VG), which compares with each other two successive message blocks received via the message distribution system (SMX) and informs the said processor system (MP) with an event signal (INT) only in the event of inequality of the message blocks, whereupon the said processor system fetches the new message block.

3. Interface module (SMXI) according to Claim 1 or 2, characterized by a control register, by means of which the said processor system (MP) can initiate the corresponding setting of the interface module for various special functions.

## Revendications

1. Composant (SMXI) d'interface pour assurer la communication entre des systèmes à processeurs ayant les particularités suivantes :
a) une interface (MPI) parallèle asynchrone vers l'un des systèmes (MP) à processeur,
b) une interface (SP,PS) sérielle synchrone vers un système (SMX) distributeur d'informations, par lequel les systèmes à processeurs communiquent les uns avec les autres,
c) une unité (IRAM,ORAM) de mémorisation intermédiaire du flux d'informations entre l'un des systèmes (MP) à processeur et le système (SMX) distributeur d'informations,
d) une unité (SWM, SWS) de commande, qui commande le composant d'interface en fonction dudit système à processeur, l'unité de commande comprenant deux organes de commande, qui commandent les deux interfaces citées en parallèle au cours d'un processus,
caractérisé par
e) au moins un registre (IR) d'initialisation, par lequel à la fois le créneau temporel, par lequel l'interface (SP, PS) sérielle synchrone reçoit du système (SMX) distributeur d'informations, des blocs d'informations, et la longueur d'un bloc d'informations mémorisé temporairement dans l'unité de mémoire sont initialisés, le registre (IR) d'initialisation est initialisé par le système (MP) à processeur, qui est relié par l'intermédiaire de l'interface (MPI) asynchrone parallèle.

2. Composant (SMXI) d'interface suivant la revendication 1, caractérisé par
un circuit (VG) comparateur, qui compare l'un à l'autre deux blocs d'informations successifs, qui sont reçus par l'intermédiaire du système (SMX) distributeur d'informations, et qui n'informe ledit système (MP) à processeur par un signal (INT) d'excitation qu'en cas d'inégalité des blocs d'informations, et dans ce cas, ce système à processeur prend le nouveau bloc d'informations.

3. Composant (SMXI) d'interface suivant la revendication 1 ou 2, caractérisé par un registre de commande, par lequel ledit système (MP) à processeur peut provoquer le réglage correspondant du composant d'interface pour des fonctions particulières différentes.
